# EUROPEAN PATENT SPECIFICATION

(11) **EP 4 197 219 B1**
(45) Date of publication and mention of the grant of the patent: **04.12.2024**
(21) Application number: 21758120.6
(22) Date of filing: 11.08.2021
(51) Int. Cl.: H04W 24/02, G06N 3/02, G06N 3/08, G06N 20/00

(54) **PATH-AWARE COGNITIVE HANDOVER OPTIMIZATION**
PFADBEWUSSTE KOGNITIVE HANDOVER-OPTIMIERUNG
OPTIMISATION DE TRANSFERT COGNITIF SENSIBLE AU TRAJET

(30) Priority: 11.08.2020 US 202063064329 P
(43) Date of publication of application: 21.06.2023
(73) Proprietor: Nokia Technologies Oy, 02610 Espoo (FI)
(72) Inventor: MWANJE, Stephen, 84405 Dorfen (DE); ALI-TOLPPA, Janne, 33960 Pirkkala (FI); KAJÓ, Márton, 81539 Munich (DE)
(74) Representative: Mudge, Kevin
(86) International application number: PCT/EP2021/072325
(87) International publication number: WO 2022/034114

(56) References cited:
- US-A1- 2016 302 128
- US-A1- 2017 026 888
- US-A1- 2017 325 140
- US-A1- 2019 239 100

## Description

### TECHNICAL FIELD:

Some example embodiments may generally relate to mobile or wireless telecommunication systems, such as Long Term Evolution (LTE), fifth generation (5G) radio access technology (RAT), new radio (NR) access technology, and/or other communications systems. For example, certain example embodiments may relate to systems and/or methods for path-aware cognitive handover optimization.

### BACKGROUND:

Examples of mobile or wireless telecommunication systems may include 5G RAT, the Universal Mobile Telecommunications System (UMTS) Terrestrial Radio Access Network (UTRAN), LTE Evolved UTRAN (E-UTRAN), LTE-Advanced (LTE-A), LTE-A Pro, NR access technology, and/or MulteFire Alliance. 5G wireless systems refer to the next generation (NG) of radio systems and network architecture. A 5G system is typically built on a 5G NR, but a 5G (or NG) network may also be built on E-UTRA radio. It is expected that NR can support service categories such as enhanced mobile broadband (eMBB), ultra-reliable low-latency-communication (URLLC), and massive machine type communication (mMTC). NR is expected to deliver extreme broadband, ultra-robust, low latency connectivity, and massive networking to support the Internet of Things (IoT). The next generation radio access network (NG-RAN) represents the RAN for 5G, which may provide radio access for NR, LTE, and LTE-A. It is noted that the nodes in 5G providing radio access functionality to a user equipment (e.g., similar to the Node B in UTRAN or the Evolved Node B (eNB) in LTE) may be referred to as next-generation Node B (gNB) when built on NR radio, and may be referred to as next-generation eNB (NG-eNB) when built on E-UTRA radio.

Further prior art documents are US 2017/026888 A1 showing a system and method to facilitate radio access point load prediction in a network environment, US 2016/302128 A1 showing a rate adaptation during handoffs, US 2017/325140 A1 showing methods and apparatus for performing HO decisions in a mobile network and US 2019/239100 A1 showing a machine learning-based approach to network planning using observed patterns.

### SUMMARY:

In accordance with some embodiments, there are provided methods, apparatuses, a non-transitory, computer-readable medium, and a computer program product according to the respective claims.

### BRIEF DESCRIPTION OF THE DRAWINGS:

For proper understanding of example embodiments, reference should be made to the accompanying drawings, wherein:
FIG. 1 illustrates an example of a signaling diagram according to certain embodiments.
FIG. 2 illustrates an example of PACHO techniques for data collection and model training according to various embodiments.
FIG. 3 illustrates an example of a path-aware cognitive handover optimization (PACHO) according to some embodiments.
FIG. 4 illustrates an example of generating labelled data and loss functions from path and signal profiles according to some embodiments.
FIG. 5 illustrates an example of PACHO model training according to various embodiments.
FIG. 6 illustrates an example topology of a sequence-processing convolutional neural network for PACHO according to certain embodiments.
FIG. 7 illustrates an example of PACHO techniques for model exchange and inference according to certain embodiments.
FIG. 8 illustrates an example of a PACHO inference in a user equipment according to some embodiments.
FIG. 9 illustrates an example of a flow diagram of a method according to various embodiments.
FIG. 10 illustrates an example of a flow diagram of another method according to various embodiments.
FIG. 11 illustrates an example of various network devices according to some embodiments.

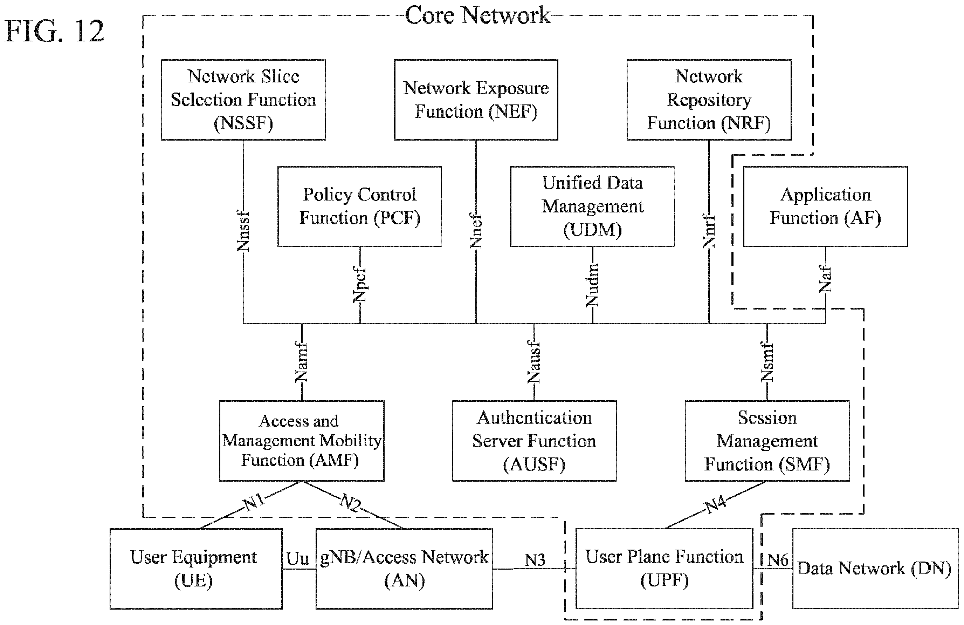

FIG. 12 illustrates an example of a 5G network and system architecture according to certain embodiments.

### DETAILED DESCRIPTION:

It will be readily understood that the components of certain example embodiments, as generally described and illustrated in the figures herein, may be arranged and designed in a wide variety of different configurations. Thus, the following detailed description of PACHO procedures may train machine-learning models to learn user paths and optimal handover settings, such as cell individual offset (CIO) and time-to-trigger (TTT), for particular paths and related speeds. These optimal handover settings may then factor into evaluations of handover target candidate cells and handover points, using legacy handover processes and/or conditional handover procedures. In addition, PACHO procedures may learn optimal target cell and handover points when configured with high inference frequencies, along with higher signaling and/or computational loads. Learning optimal handover settings, such as CIO and TTT, allows PACHO to evaluate target candidates and handover points using legacy handover logic.

According to some embodiments, optimal triggers may be learned by the ML model post-processing historical reports during training. For example, the ML may be a neural network trained with model parameters offline, and configured with a set of hyper parameters based on data collected from multiple user paths. Such a trained model may then be compressed and transmitted to user devices to perform inferences. User devices may perform any number of inferences by supplying radio measurement and/or user location data to the model, with the model returning parameters, such as optimal CIO and TTT values, customized to the user and the path of the user. In this way, private user location data is not shared with the network when performing inferences.

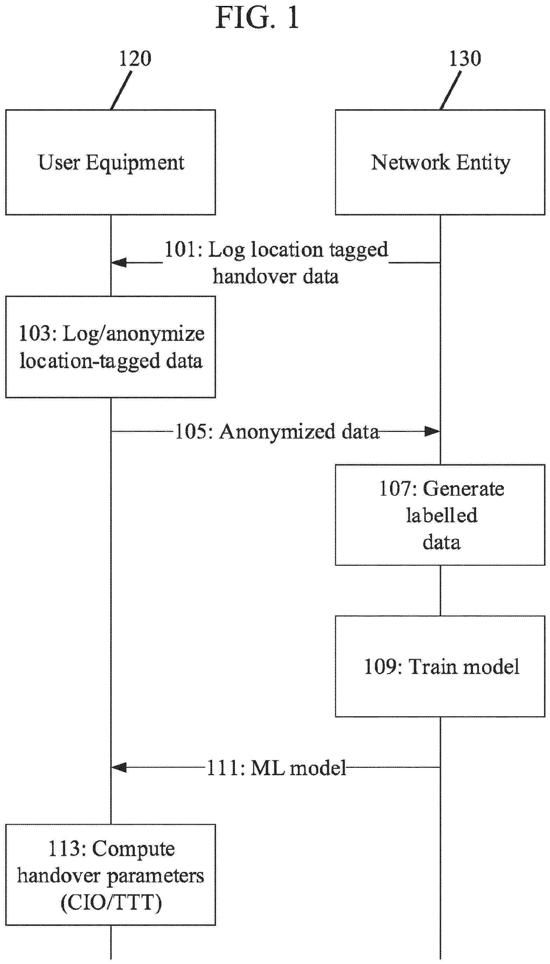

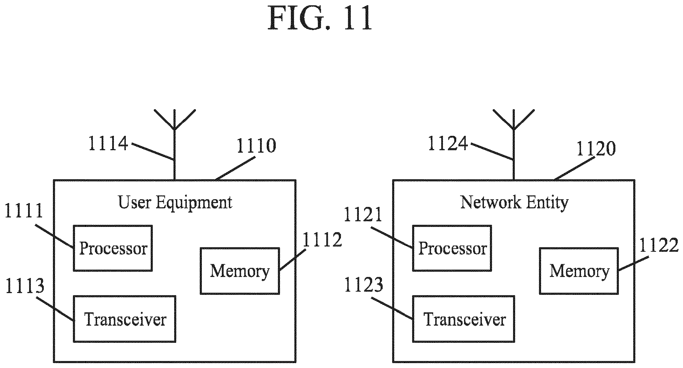

FIG. 1 illustrates an example of a signaling diagram depicting path-aware cognitive handover optimization. UE 120 and NE 130 may be similar to UE 1110 and NE 1120, as illustrated in FIG. 11, according to certain embodiments.

At 101, NE 130 configures one or more UE, including UE 120, to log location-tagged handover data configured to train at least one ML model. In various embodiments, NE 130 may only configure a subset of the UE that NE 130 serves, and may randomly select the UE belonging to the subset in order to improve anonymization. In addition, UE 120 may opt-out of reporting, but by default, reporting may be enabled on capable devices.

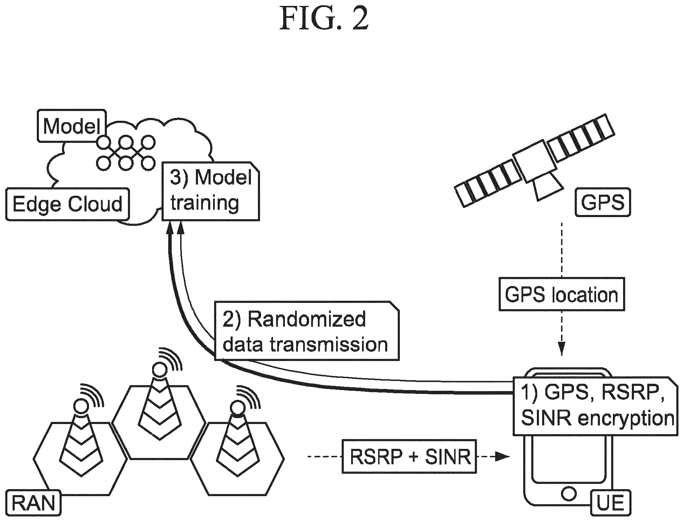

At 103, as shown in FIG. 2, UE 120 logs, which may then be transmitted to NE 130 at 105. UE may anonymize the location-tagged data. The anonymized, location-tagged data may be configured for ML training. In various embodiments, the anonymization may anonymize the identity of UE 120, users of UE 120, and any other data capable of tracking UE 120. For example, in transmitting the data at 105, UE 120 may transmit location-identified reports to NE 130 at a time that is randomly different from the time at which UE 120 compiled the report.

In various embodiments, UE 120 may transmit reports when UE 120 is not actively in use and/or with a delay between the recording of the report and its upload. For example, UE 120 may select a random time to transmit reports. This may further improve user privacy since out-of-date user location or path is not as sensitive information as up-to-date location/path data. Additionally, the anonymized data may be encrypted. Since the communication of reports is not time-sensitive, encryption and/or reporting may be performed in off-hours, when UE 120 and/or NE 130 is not heavily in use. Since reported paths and related location coordinates are not quantized, exact GPS values are used, leaving the selection of granularity to the ML model.

In various embodiments, reports may be used as input data for training ML models, which may include the time series of locations visited (GPS coordinates) before and after handover, and/or corresponding measured RSRP values of visible cells. The lengths of the time series both before and after the handover may be configured by NE 130, and may be equal. As an example, the time series may be supplemented with the kind and times of HO events registered in relation to the specific handover. Such events may include any of handover initiation, handover failure, radio link failure, and/or ping pong. For each initiated handover, reports may include applied HO trigger conditions, such as A3, A4, etc., and/or applicable RSRP and SINR values at which the handover was initiated. In addition, for handover events, such as handover initiations, reports may include locations at which a HO event was registered, such as geographical coordinates captured, for example using GPS, and/or the speed (or approximation thereof) at which UE 120 was moving when the event happened.

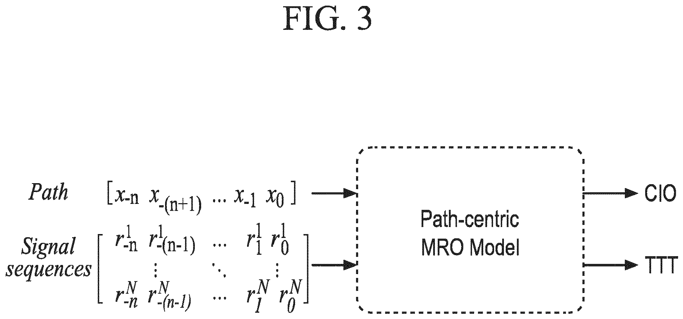

At 107, NE 130 labels data to train at least one ML model. For example, ML models may be trained by inputting sequences of location and/or reference signal received power (RSRP) measurements, such as in FIG. 3. To achieve this, NE 130 may identify optimal handover points to minimize unwanted handover events (such as handover failures, radio link failures and/or ping pongs), and/or optimize a specific quality metric, such as service interruption percentage. In various embodiments, optimal handover optimization may account for the speed and direction of UE 120. The sequence of GPS points taken at a fixed frequency may identify both the path on which UE 120 was moving and the speed with which it was moving. Thus, GPS coordinates may be collected at a fixed frequency.

In some embodiments, the frequency of measuring these values may be configured by NE 130 differently for different user locations. For example, near a highway where UE 120 is likely to move at high speed, a higher frequency may be configured to ensure a good characterization of the path. On the other hand, a city's business district may have many paths close to each other, so a high frequency may also be needed there to distinguish the different paths. Conversely, a mountain resort area where most users walk on foot and on a few paths may require only intermittent GPS records to adequately identify the paths and the proper settings on those paths.

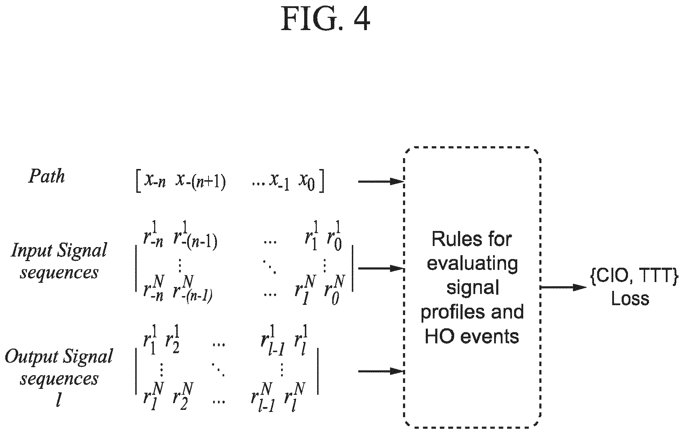

In certain embodiments, RSRP measurement sequences for the serving & candidate target cells may be used to identify likely handover events (handover successes, handover failures, radio Link failures, and/or ping pongs) that may occur if different handover settings (e.g., different CIO and/or TTT values) are applied. Labeled data may apply a set of rules configured to evaluate the accuracy of each handover event, such as shown in FIG. 4. For each setting applied to the path (and related RSRP sequences), resulting handover events may be graded to compute loss function, resulting in a hash function of {path + handover setting : resulting loss}.

While signal and position sequences may be used to generate proper labels for training, the availability of handover events may further improve the labelling. For example, some embodiments leading to specific handover events (e.g., a sharp blockage that causes handover failures) may be difficult to identify by reverse engineering the signal profiles. Thus, the handover event may be used to identify the point at which the event occurred to train the model to derive the settings that would avoid such an event.

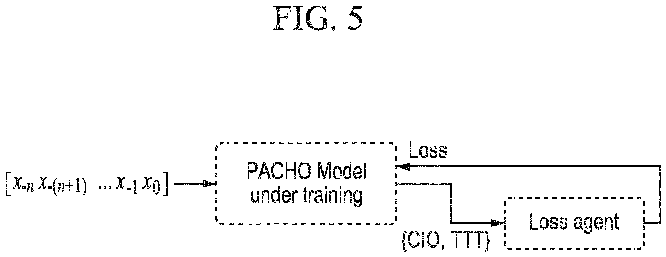

At 109, NE 130 trains at least one ML model based upon the labelled data, such as shown in FIG. 5. For example, the at least one ML model may be trained as cell-specific, cell-boundary-specific, and/or cell-cluster-specific machine learning models, such as a neural network model. In various embodiments, RLF, HOF and/or successful HO reports may be extended to include the CIO and/or TTT parameter, which may improve the training and further fine-tune the model. However, with UE 120 selecting settings according to the path, UE 120 may inform NE 130 about the settings that were applied to trigger the handover.

In various embodiments, training may be performed in a supervised-learning-form using the sequences of RSRP values before and after the HO event. UE 130 may send the data to UE 120 which NE 130 may aggregate to perform batched learning. The model may then learns the profile of the RSRP values along each path across a given cell-pair boarder. Using the learned RSRP profiles, the solution may compute optimal TTT and CIO values for the different paths, which may then be forwarded to any other UEs to be used to trigger handovers along those paths. Training may also be performed actively, such as with reinforcement learning, based on the feedback of UE 120 concerning events observed by UE 120. If an event occurs, UE 120 may report the event together with the path or location sequence and RSRP values at which the event occurred. NE 130 may then update the model for the specific path or location and/or compute new HO settings (TTT and CIO) for the path/location. These settings may then be transmitted to other UE along a similar path for its handover evaluation.

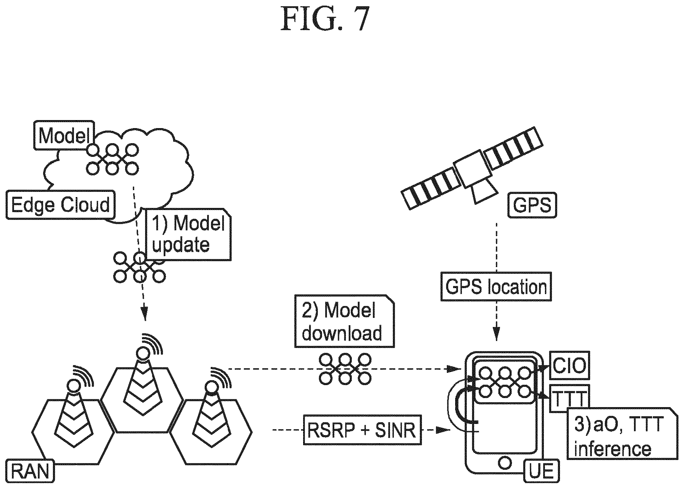

CNNs may use the layout of the data as additional information in their inference by learning filters that take into consideration neighbour relations between the input features. 1-dimensional CNNs are powerful sequence processing tools which may learn to infer various things from input sequences, such as predicting the next few steps in the sequence, or predicting the optimal CIO and TTT values. In this use, the filters formed by the convolutional layer may consider each input feature's location in a single dimension, the time dimension. With this information, the filters may internally learn to deduce current and future user locations, speed, inertia, and possible paths the user will take, as well as the corresponding radio environment, all improving in the correct prediction of optimal handover parameters. One example topology of a CNN is illustrated in FIG. 7.

If a neural network is used as the ML model, the model may be compressed by quantizing the weights. For example, the quantization process may occur after training, where the weights and activations (stored as floating points) of the net may be converted into a much simpler 8-bit integer representation. Quantized neural networks may provide certain benefits. For example, memory requirements of quantized neural networks are significantly lower than their non-compressed counterparts. In the case of PACHO, transferring this model to UE 120 may also save network resources, as well as resources on UE 120 when running inference. In addition, inferences using these networks may require less computing power, and may be much quicker than their non-compressed counterparts. This aspect may be especially relevant on lower-end devices which may struggle to infer at the required rate if the model is complex. Just as importantly, fewer computational requirements use less energy.

At 111, NE 130 transmits to UE 120 the at least one ML model, as shown in FIG. 7. In various embodiments, in order to minimize the inference-related computation load in UE 120 and conserve network resources, rather than transferring the complete ML model, NE 130 may transfer a compressed version of the model to UE 120. For example, the compression may be performed using quantization of neural network weights. Alternative compression mechanisms may also be used, such as hash functions.

In various embodiments, PACHO may separate ML model training from related inference calculations based on the trained model. The model may be trained in the network, e.g., in NE 130 and/or the OAM. When fully trained, the trained ML model is signaled to UE 130 for use in deciding the appropriate HO settings. To enable/ease inference in UE 120, the ML model may be simple and small to minimize computational resources required by UE 120 to compute the inference from the model. Such a model may, for example, be a quantized neural network.

Furthermore, the trained model may be sent to UE 120 in the form of a set of parameters that may be used to infer the outcome for a given path and radio network characteristics. Such a model may be specific for each path, *e*.*g*. turning right at the junction or for each location, identified by *e.g.* a physical feature (like a train station, a park, etc.). Alternatively, it may be a general to a wider area (*e.g*., a radio cell), but with path and location information, (*e*.*g*., sequence of) GPS coordinates, as one of the inputs that are taken to compute the correct TTT and CIO values and from those the correct HO trigger point.

For inference, UE 120 applies its specific characteristics into the model to infer the point at which to trigger the handover (*i.e*., to infer TTT and/or CIO values). The inference is characterized by easing the computational cost UE 120 may initiate the computation only if certain events occur, *e.g*., only if the RSRP in the target cell becomes equal to that in the source cell, in which case UE 120 seek the point at which the target is better than the source to be the server. Additionally or alternatively, the input data during inference may include the user path and its derivatives, such as direction, speed, or acceleration. Optionally, the RSRP and SINR measurements as observed by UE 120 may also be included as inference input data. Furthermore, the output during inference may be a tuple of the CIO and TTT values that UE 120 should apply to evaluate whether and when to initiate a handover. Optionally, the model may also output the time that should elapse before the next inference/update is executed. UE 120 may log events related to the success of the parameters computed by the model. These may then be used to tune the model as needed. In case of active learning for example, UE 120 may report the event, path, and RSRP values with which NE 130 may update the model for the specific path, which may in future then be sent to another UE in along a similar path for its handover evaluation.

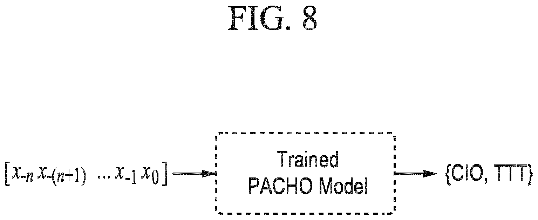

At 113, UE 120 calculates optimal CIO and/or TTT values based upon the optimal handover points, which may indicate that handovers may occur at these optimal points when the calculated CIO and/or TTT values are applied, as shown in FIG. 8. In various embodiments, the calculated optimal CIO and/or TTT values may be configured as labels for the user paths in the training data. For example, UE 130 may determine at least one possible path across handover boundaries and/or models of radio conditions and handover performance along these possible paths. Additionally or alternatively, NE 130 may determine optimal HO settings (*i*.*e*. the optimal TTT and CIO values) for each path along the handover boundary and for the particular UE mobility profile. In this way, user privacy may be protected, and the risk of tracking the user may be minimized. Since the ML model is received from NE 130, UE 120 performs inference, as opposed to UE 120 sending its locations and/or paths to NE 130 for NE 130 to infer the optimal handover settings. For inference, UE 120 inputs its path, such as a sequence of GPS coordinates, and/or other radio measurements; thereafter, UE 120 may use the received ML models to compute appropriate CIO and/or TTT values that UE 120 should apply for handover procedures. In various embodiments, where UE 120 has received a neural network, UE 120 may feed the model with its own path, generating optimized path and/or mobility-profile-specific handover parameters. UE 120 may then perform at least one handover procedure, such as CHO. In various embodiments, where UE 120 has received a compression of the neural network, UE 120 may match its path with at least one applicable identifier of paths with the model compression. Then, when matched, UE 120 may apply the parameters corresponding to that path identifier. UE 120 may then perform at least one handover procedure, such as CHO.

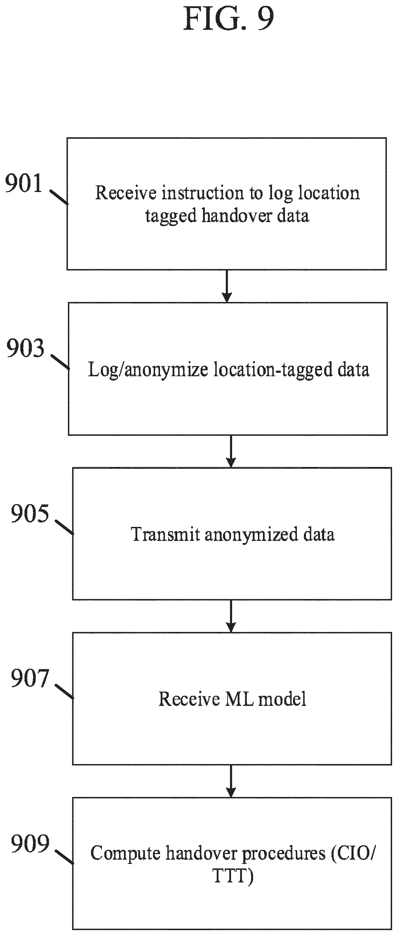

FIG. 9 illustrates an example of a flow diagram of a method that may be performed by a UE, such as UE 1110 illustrated in FIG. 11, according to various embodiments. At 901, the UE receives, from a NE similar to NE 1120 in FIG. 11, at least one instruction to log location-tagged handover data configured to train at least one ML model. In various embodiments, the NE may only configure a subset of the UE that the RAN serves, and may randomly select the UE belonging to the subset in order to improve anonymization.

In addition, the UE may opt-out of reporting, but by default, reporting may be enabled on capable devices.

At 903, as shown in FIG. 9, the UE logs location-tagged data, which may then be transmitted to the NE at 905. The UE may anonymize the location-tagged data. The anonymized, location-tagged data may be configured for ML training. In various embodiments, the anonymization may anonymize the identity of the UE, users of the UE, and any other data capable of tracking the UE. For example, in transmitting the data at 905, the UE may transmit location-identified reports to the NE at a time that is randomly different from the time at which the UE compiled the report.

In various embodiments, the UE may transmit reports when the UE is not actively in use and/or with a delay between the recording of the report and its upload. For example, the UE may select a random time to transmit reports. This may further improve user privacy since out-of-date user location or path is not as sensitive information as up-to-date location/path data. Additionally, the anonymized data may be encrypted. Since the communication of reports is not time-sensitive, encryption and/or reporting may be performed in off-hours, when the UE and/or the NE is not heavily in use. Since reported paths and related location coordinates are not quantized, exact GPS values are used, leaving the selection of granularity to the ML model.

In various embodiments, reports may be used as input data for training ML models, which may include the time series of locations visited (GPS coordinates) before and after handover, and/or corresponding measured RSRP values of visible cells. The lengths of the time series both before and after the handover may be configured by the NE, and may be equal. As an example, the time series may be supplemented with the kind and times of HO events registered in relation to the specific handover. Such events may include any of handover initiation, handover failure, radio link failure, and/or ping pong. For each initiated handover, reports may include applied HO trigger conditions, such as A3, A4, etc., and/or applicable RSRP and SINR values at which the handover was initiated. In addition, for handover events, such as handover initiations, reports may include locations at which a HO event was registered, such as geographical coordinates captured, for example using GPS, and/or the speed (or approximation thereof) at which the UE was moving when the event happened.

At 907, the UE receives at least one ML model, as shown in FIG. 7. In various embodiments, in order to minimize the inference-related computation load in the UE and conserve network resources, rather than transferring the complete ML model, the NE may transfer a compressed version of the model to the UE. For example, the compression may be performed using quantization of neural network weights. Alternative compression mechanisms may also be used, such as hash functions.

In various embodiments, PACHO may separate ML model training from related inference calculations based on the trained model. The model may be trained in the network, *e*.*g*., in NE 130 and/or the OAM. When fully trained, the trained ML model is signaled to the UE for use in deciding the appropriate HO settings. To enable/ease inference in the UE, the ML model may be simple and small to minimize computational resources required by the UE to compute the inference from the model. Such a model may, for example, be a quantized neural network.

Furthermore, the trained model may be sent to the UE in the form of a set of parameters that may be used to infer the outcome for a given path and radio network characteristics. Such a model may be specific for each path, *e*.*g*. turning right at the junction or for each location, identified by *e.g.* a physical feature (like a train station, a park, etc.). Alternatively, it may be a general to a wider area (*e.g*., a radio cell), but with path and location information, (*e*.*g*., sequence of) GPS coordinates, as one of the inputs that are taken to compute the correct TTT and CIO values and from those the correct HO trigger point.

For inference, the UE may apply its specific characteristics into the model to infer the point at which to trigger the handover (*i*.*e*., to infer TTT and/or CIO values). The inference is characterized by easing the computational cost the UE may initiate the computation only if certain events occur, *e.g*., only if the RSRP in the target cell becomes equal to that in the source cell, in which case the UE seek the point at which the target is better than the source to be the server. Additionally or alternatively, the input data during inference may include the user path and its derivatives, such as direction, speed, or acceleration. Optionally, the RSRP and SINR measurements as observed by the UE may also be included as inference input data. Furthermore, the output during inference may be a tuple of the CIO and TTT values that the UE should apply to evaluate whether and when to initiate a handover. Optionally, the model may also output the time that should elapse before the next inference/update is executed. The UE may log events related to the success of the parameters computed by the model. These may then be used to tune the model as needed. In case of active learning for example, the UE may report the event, path, and RSRP values with which the NE may update the model for the specific path, which may in future then be sent to another UE in along a similar path for its handover evaluation.

At 909, the UE calculates optimal CIO and/or TTT values based upon the optimal handover points, which may indicate that handovers may occur at these optimal points when the calculated CIO and/or TTT values are applied, as shown in FIG. 8. In various embodiments, the calculated optimal CIO and/or TTT values may be configured as labels for the user paths in the training data. For example, the UE may determine at least one possible path across handover boundaries and/or models of radio conditions and handover performance along these possible paths. Additionally or alternatively, the NE may determine optimal HO settings (*i*.*e*. the optimal TTT and CIO values) for each path along the handover boundary and for the particular UE mobility profile. In this way, user privacy may be protected, and the risk of tracking the user may be minimized. Since the ML model is received from the NE, the UE performs inference, as opposed to the UE sending its locations and/or paths to the NE for the NE to infer the optimal handover settings. For inference, the UE inputs its path, such as a sequence of GPS coordinates, and/or other radio measurements; thereafter, the UE may use the received ML models to compute appropriate CIO and/or TTT values that the UE should apply for handover procedures. In various embodiments, where the UE has received a neural network, the UE may feed the model with its own path, generating optimized path and/or mobility-profile-specific handover parameters. The UE may then perform at least one handover procedure, such as CHO. In various embodiments, where the UE has received a compression of the neural network, the UE may match its path with at least one applicable identifier of paths with the model compression. Then, when matched, the UE may apply the parameters corresponding to that path identifier. The UE may then perform at least one handover procedure, such as CHO.

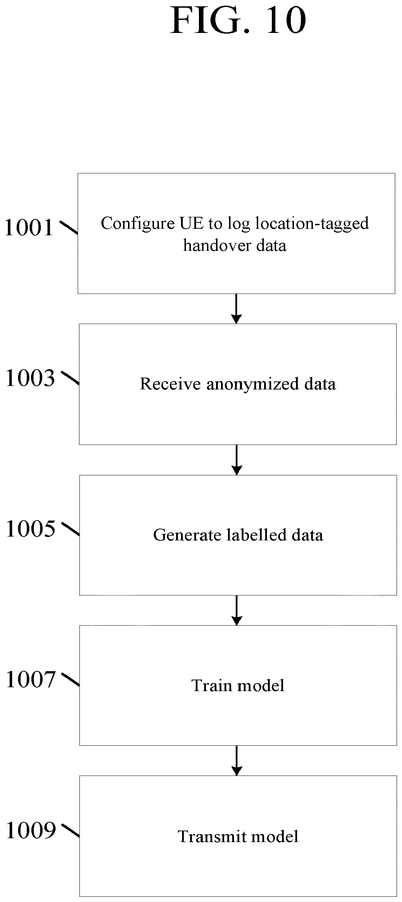

FIG. 10 illustrates an example of a flow diagram of a method that may be performed by a NE, such as NE 1120 illustrated in FIG. 11, according to various embodiments. At 1001, the NE configures one or more UE to log location-tagged handover data configured to train at least one ML model. In various embodiments, the NE may only configure a subset of the UE that the NE serves, and may randomly select the UE belonging to the subset in order to improve anonymization. In addition, the UE may opt-out of reporting, but by default, reporting may be enabled on capable devices.

At 105, the NE receives location-identified reports from the UE at a time that is randomly different from the time at which UE 120 compiled the report.

In various embodiments, the NE may receive reports when the UE is not actively in use and/or with a delay between the recording of the report and its upload. For example, the UE may select a random time to transmit reports. This may further improve user privacy since out-of-date user location or path is not as sensitive information as up-to-date location/path data. Additionally, the anonymized data may be encrypted. Since the communication of reports is not time-sensitive, encryption and/or reporting may be performed in off-hours, when the UE and/or the NE is not heavily in use. Since reported paths and related location coordinates are not quantized, exact GPS values are used, leaving the selection of granularity to the ML model.

In various embodiments, reports may be used as input data for training ML models, which may include the time series of locations visited (GPS coordinates) before and after handover, and/or corresponding measured RSRP values of visible cells. The lengths of the time series both before and after the handover may be configured by the NE, and may be equal. As an example, the time series may be supplemented with the kind and times of HO events registered in relation to the specific handover. Such events may include any of handover initiation, handover failure, radio link failure, and/or ping pong. For each initiated handover, reports may include applied HO trigger conditions, such as A3, A4, etc., and/or applicable RSRP and SINR values at which the handover was initiated. In addition, for handover events, such as handover initiations, reports may include locations at which a HO event was registered, such as geographical coordinates captured, for example using GPS, and/or the speed (or approximation thereof) at which the UE was moving when the event happened.

At 1005, the NE labels data to train at least one ML model. For example, ML models may be trained by inputting sequences of location and/or reference signal received power (RSRP) measurements, such as in FIG. 3. To achieve this, the NE may identify optimal handover points to minimize unwanted handover events (such as handover failures, radio link failures and/or ping pongs), and/or optimize a specific quality metric, such as service interruption percentage. In various embodiments, optimal handover optimization may account for the speed and direction of the UE. The sequence of GPS points taken at a fixed frequency may identify both the path on which the UE was moving and the speed with which it was moving. Thus, GPS coordinates may be collected at a fixed frequency.

In some embodiments, the frequency of measuring these values may be configured by the NE differently for different user locations. For example, near a highway where the UE is likely to move at high speed, a higher frequency may be configured to ensure a good characterization of the path. On the other hand, a city's business district may have many paths close to each other, so a high frequency may also be needed there to distinguish the different paths. Conversely, a mountain resort area where most users walk on foot and on a few paths may require only intermittent GPS records to adequately identify the paths and the proper settings on those paths.

In certain embodiments, RSRP measurement sequences for the serving & candidate target cells may be used to identify likely handover events (handover successes, handover failures, radio Link failures, and/or ping pongs) that may occur if different handover settings (*e*.*g*., different CIO and/or TTT values) are applied. Labeled data may apply a set of rules configured to evaluate the accuracy of each handover event, such as shown in FIG. 4. For each setting applied to the path (and related RSRP sequences), resulting handover events may be graded to compute loss function, resulting in a hash function of {path + handover setting : resulting loss}.

While signal and position sequences may be used to generate proper labels for training, the availability of handover events may further improve the labelling. For example, some embodiments leading to specific handover events (*e*.*g*., a sharp blockage that causes handover failures) may be difficult to identify by reverse engineering the signal profiles. Thus, the handover event may be used to identify the point at which the event occurred to train the model to derive the settings that would avoid such an event.

At 1007, the NE trains at least one ML model based upon the labelled data, such as shown in FIG. 5. For example, the at least one ML model may be trained as cell-specific, cell-boundary-specific, and/or cell-cluster-specific machine learning models, such as a neural network model. In various embodiments, RLF, HOF and/or successful HO reports may be extended to include the CIO and/or TTT parameter, which may improve the training and further fine-tune the model. However, with the UE selecting settings according to the path, the UE may inform the NE about the settings that were applied to trigger the handover.

In various embodiments, training may be performed in a supervised-learning-form using the sequences of RSRP values before and after the HO event. The NE may receive the data from the UE which the NE may aggregate to perform batched learning. The model may then learns the profile of the RSRP values along each path across a given cell-pair boarder. Using the learned RSRP profiles, the solution may compute optimal TTT and CIO values for the different paths, which may then be forwarded to any other UEs to be which may struggle to infer at the required rate if the model is complex. Just as importantly, fewer computational requirements use less energy.

At 1009, the NE transmits to the UE the at least one ML model, as shown in FIG. 7. In various embodiments, in order to minimize the inference-related computation load in UE 120 and conserve network resources, rather than transferring the complete ML model, the NE may transfer a compressed version of the model to the UE. For example, the compression may be performed using quantization of neural network weights. Alternative compression mechanisms may also be used, such as hash functions.

In various embodiments, PACHO may separate ML model training from related inference calculations based on the trained model. The model may be trained in the network, e.g., in the NE and/or the OAM. When fully trained, the trained ML model is signaled to the UE for use in deciding the appropriate HO settings. To enable/ease inference in the UE, the ML model may be simple and small to minimize computational resources required by the UE to compute the inference from the model. Such a model may, for example, be a quantized neural network.

Furthermore, the trained model may be sent to the UE in the form of a set of parameters that may be used to infer the outcome for a given path and radio network characteristics. Such a model may be specific for each path, *e*.*g*. turning right at the junction or for each location, identified by *e.g.* a physical feature (like a train station, a park, etc.). Alternatively, it may be a general to a wider area (*e*.*g*., a radio cell), but with path and location information, (*e*.*g*., sequence of) GPS coordinates, as one of the inputs that are taken to compute the correct TTT and CIO values and from those the correct HO trigger point.

For inference, the UE may apply its specific characteristics into the model to infer the point at which to trigger the handover (*i.e*., to infer TTT and/or CIO values). The inference is characterized by easing the computational cost UE 120 may initiate the computation only if certain events occur, *e.g*., only if the RSRP in the target cell becomes equal to that NE 1110 and/or UE 1120 may include at least one processor, respectively indicated as 1111 and 1121. Processors 1111 and 1121 may be embodied by any computational or data processing device, such as a central processing unit (CPU), application specific integrated circuit (ASIC), or comparable device. The processors may be implemented as a single controller, or a plurality of controllers or processors.

At least one memory may be provided in one or more of the devices, as indicated at 1112 and 1122. The memory may be fixed or removable. The memory may include computer program instructions or computer code contained therein. Memories 1112 and 1122 may independently be any suitable storage device, such as a non-transitory computer-readable medium. A hard disk drive (HDD), random access memory (RAM), flash memory, or other suitable memory may be used. The memories may be combined on a single integrated circuit as the processor, or may be separate from the one or more processors. Furthermore, the computer program instructions stored in the memory, and which may be processed by the processors, may be any suitable form of computer program code, for example, a compiled or interpreted computer program written in any suitable programming language.

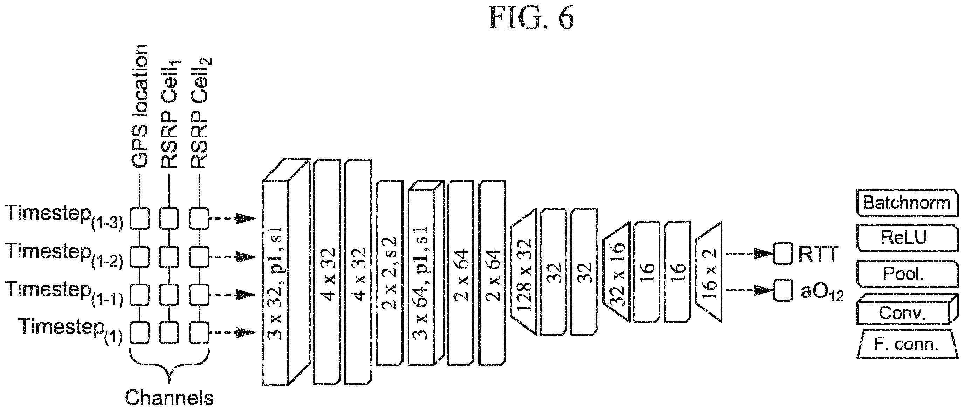

Processors 1111 and 1121, memories 1112 and 1122, and any subset thereof, are configured to provide means corresponding to the various blocks of FIGS. 1-10. Although not shown, the devices may also include positioning hardware, such as GPS or micro electrical mechanical system (MEMS) hardware, which may be used to determine a location of the device. Other sensors are also permitted, and may be configured to determine location, elevation, velocity, orientation, and so forth, such as barometers, compasses, and the like.

As shown in FIG. 11, transceivers 1113 and 1123 may be provided, and one or more devices may also include at least one antenna, respectively illustrated as 1114 and 1124. The device may have many antennas, such as an array of antennas configured for multiple input multiple output (MIMO) communications, or multiple antennas for multiple RATs. packets, user plane quality of service (QoS) processing, buffering of downlink packets, and/or triggering of downlink data notifications. The application function (AF) may primarily interface with the core network to facilitate application usage of traffic routing and interact with the policy framework.

One having ordinary skill in the art will readily understand that the example embodiments discussed above may be practiced with procedures in a different order, and/or with hardware elements in configurations which are different than those which are disclosed. Therefore, although some embodiments have been described based upon these example embodiments, it would be apparent to those of skill in the art that certain modifications, variations, and alternative constructions would be apparent, while remaining within the scope of claims.

### Partial Glossary

- 3GPP: Third Generation Partnership Project
- 5G: Fifth Generation
- 5GC: Fifth Generation Core
- 5GS: Fifth Generation System
- 5QI: Fifth Generation Quality of Service Indicator
- AI: Artificial Intelligence
- AMF: Access and Mobility Management Function
- ASIC: Application Specific Integrated Circuit
- BS: Base Station
- CAN: Cognitive Autonomous Network
- CAPC: Channel Access Priority Class
- CBSD: Citizens Broadband Radio Service Device
- CE: Control Elements
- CF: Cognitive Function
- CHO: Conditional Handover
- CIO: Cell-Individual Offset
- CN: Core Network
- CNM: Cognitive Network Management
- CNN: Convolutional Neural Network
- CPU: Central Processing Unit
- CU: Centralized Unit
- eMBB: Enhanced Mobile Broadband
- eMTC: Enhanced Machine Type Communication
- eNB: Evolved Node B
- eOLLA: Enhanced Outer Loop Link Adaptation
- EPS: Evolved Packet System
- gNB: Next Generation Node B
- GPS: Global Positioning System
- HDD: Hard Disk Drive
- HO: Handover

## Claims

1. A method, comprising:
transmitting (101, 1001), by a network element, at least one instruction to at least one user equipment to log location-tagged handover data, wherein the location-tagged handover data comprise one or more of at least one path, at least one observed reference signal received power associated with at least one cell, and at least one global positioning system coordinate;
receiving (105, 1003), by the network element from the at least one user equipment, the location-tagged handover data;
labelling (107, 1005) the received location-tagged handover data by computing, by the network element, at least one loss function based upon at least one handover event evaluation rule of the received location-tagged handover data, thus generating labelled data; and
training (109, 1007), by the network element, at least one handover optimization model with the location-tagged handover data,
wherein the handover optimization model is a machine learning model;
transmitting (111, 1009), to the at least one user equipment, the trained machine learning model.

2. A method, comprising:
receiving (101, 901), by a user equipment from at least one network entity, at least one instruction to log location-tagged data;
logging (903), by the user equipment, the location-tagged data;
transmitting (103, 905), by the user equipment, the location-tagged data to the at least one network entity;
receiving (111, 907), by the user equipment from the at least one network entity, at least one machine learning model trained with the transmitted location-tagged data, comprising at least one handover setting;
calculating (909), by the user equipment using the at least one machine learning model, one or more handover procedure trigger parameters; and
initiating, by the user equipment, at least one handover procedure based on the one or more handover procedure trigger parameters.

3. The method of claim 2, wherein the at least one handover procedure trigger parameter comprises one or more of at least one cell-individual-offset and at least one time-to-trigger.

4. The method of any of claims 2 and 3, further comprising:
anonymizing the location-tagged data.

5. An apparatus, comprising:
means for performing a process according to claim 1 or a process according to any of claims 2-4.

6. A non-transitory, computer-readable medium comprising program instructions stored thereon for performing a process according to claim 1 when the instructions are executed by a processor of a network element, or, for performing a process according to any of claims 2 to 4 when the instructions are executed by a processor of a user equipment.

7. A computer program product encoded with instructions for performing a process according to claim 1 when the instructions are executed by a processor of a network element, or, for performing a process according to any of claims 2 to 4 when the instructions are executed by a processor of a user equipment.

## Patentansprüche

1. Verfahren, das Folgendes umfasst:
Übertragen (101, 1001) von mindestens einer Anweisung durch ein Netzwerkelement zu mindestens einer Teilnehmereinrichtung zum Protokollieren von standortgekennzeichneten Übergabedaten, wobei die standortgekennzeichneten Übergabedaten eines oder mehreres von mindestens einem Pfad, mindestens einer beobachteten Referenzsignalempfangsleistung, die mit mindestens einer Zelle verknüpft ist, und mindestens einer globalen Positionsbestimmungssystemkoordinate umfasst;
Empfangen (105, 1003) der standortgekennzeichneten Übergabedaten durch das Netzwerkelement von der mindestens einen Teilnehmereinrichtung;
Markieren (107, 1005) der empfangenen standortgekennzeichneten Übergabedaten durch Errechnen von mindestens einer Verlustfunktion durch das Netzwerkelement auf Basis von mindestens einer Übergabeereignisauswertungregel der empfangenen standortgekennzeichneten Übergabedaten, wodurch markierte Daten erzeugt werden; und
Trainieren (109, 1007) von mindestens einem Übergabeoptimierungsmodell durch das Netzwerkelement mit den standortgekennzeichneten Übergabedaten, wobei das Übergabeoptimierungsmodell ein Maschinenlernmodell ist;
Übertragen (111, 1009) des trainierten Maschinenlernmodells zu der mindestens einen Teilnehmereinrichtung.

2. Verfahren, das Folgendes umfasst:
Empfangen (101, 901) von mindestens einer Anweisung zum Protokollieren von standortgekennzeichneten Daten durch eine Teilnehmereinrichtung von mindestens einer Netzwerkentität;
Protokollieren (903) der standortgekennzeichneten Daten durch die Teilnehmereinrichtung;
Übertragen (103, 905) der standortgekennzeichneten Daten durch die Teilnehmereinrichtung zu der mindestens einen Netzwerkentität;
Empfangen (111, 907) von mindestens einem Maschinenlernmodell, das mit den übertragenen standortgekennzeichneten Daten trainiert wurde, die mindestens eine Übergabeeinstellung umfassen, durch die Teilnehmereinrichtung von der mindestens einen Netzwerkentität;
Berechnen (909) von einem oder mehreren Übergabeprozedurauslöseparametern durch die Teilnehmereinrichtung unter Verwendung des mindestens einen Maschinenlernmodells; und
Initiieren von mindestens einer Übergabeprozedur durch die Teilnehmereinrichtung auf Basis des einen oder der mehreren Übergabeprozedurauslöseparameter.

3. Verfahren nach Anspruch 2, wobei der mindestens eine Übergabeprozedurauslöseparameter eines oder mehreres von mindestens einem Zelleneinzelversatz und mindestens einer Zeitbis-Auslösung umfasst.

4. Verfahren nach einem der Ansprüche 2 und 3, das ferner Folgendes umfasst:
Anonymisieren der standortgekennzeichneten Daten.

5. Vorrichtung, die Folgendes umfasst:
Mittel zum Durchführen eines Prozesses gemäß Anspruch 1 oder eines Prozesses gemäß einem der Ansprüche 2 bis 4.

6. Nichttransitorisches, computerlesbares Medium, das darauf gespeicherte Programmanweisungen zum Durchführen eines Prozesses gemäß Anspruch 1, wenn die Anweisungen von einem Prozessor eines Netzwerkelements ausgeführt werden, oder zum Durchführen eines Prozesses gemäß einem der Ansprüche 2 bis 4, wenn die Anweisungen von einem Prozessor einer Teilnehmereinrichtung ausgeführt werden, umfasst.

7. Computerprogrammprodukt, in dem Anweisungen zum Durchführen eines Prozesses gemäß Anspruch 1, wenn die Anweisungen von einem Prozessor eines Netzwerkelements ausgeführt werden, oder zum Durchführen eines Prozesses gemäß einem der Ansprüche 2 bis 4, wenn die Anweisungen von einem Prozessor einer Teilnehmereinrichtung ausgeführt werden, codiert sind.

## Revendications

1. Procédé, comprenant les étapes suivantes :
transmettre (101, 1001) par un élément de réseau au moins une instruction à au moins un équipement utilisateur pour consigner des données de transfert intercellulaire étiquetées sur site, dans lequel les données de transfert intercellulaire étiquetées sur site comprennent un ou plusieurs parmi au moins un chemin, au moins une puissance reçue de signal de référence observée associée à au moins une cellule, et au moins une coordonnée de système mondial de localisation ;
recevoir (105, 1003) de l'au moins un équipement utilisateur par l'élément de réseau les données de transfert intercellulaire étiquetées sur site ;
étiqueter (107, 1005) les données de transfert intercellulaire étiquetées sur site reçues en calculant, par l'élément de réseau, au moins une fonction de perte basée sur au moins une règle d'évaluation d'événement de transfert intercellulaire des données de transfert intercellulaire étiquetées sur site reçues, générant ainsi des données étiquetées ; et
entraîner (109, 1007) par l'élément de réseau au moins un modèle d'optimisation de transfert intercellulaire à l'aide des données de transfert intercellulaire étiquetées sur site,
dans lequel le modèle d'optimisation de transfert intercellulaire est un modèle d'apprentissage machine ;
transmettre (111, 1009) le modèle d'apprentissage machine entraîné à l'au moins un équipement utilisateur.

2. Procédé, comprenant les étapes suivantes :
recevoir (101, 901) d'au moins une entité de réseau par un équipement utilisateur au moins une instruction pour consigner les données étiquetées sur site ;
consigner (903) par l'équipement utilisateur les données étiquetées sur site ;
transmettre (103, 905) les données étiquetées sur site à l'au moins une entité de réseau par l'équipement utilisateur ;
recevoir (111, 907) de l'au moins une entité de réseau par l'équipement utilisateur au moins un modèle d'apprentissage machine entraîné avec les données étiquetées sur site transmises comprenant au moins un paramétrage de transfert intercellulaire ;
à l'aide de l'au moins un modèle d'apprentissage machine, calculer (909) par l'équipement utilisateur un ou plusieurs paramètres de déclenchement de procédure de transfert intercellulaire ; et
initier par l'équipement utilisateur au moins une procédure de transfert intercellulaire sur la base des un ou plusieurs paramètres de déclenchement de procédure de transfert intercellulaire.

3. Procédé selon la revendication 2, dans lequel l'au moins un paramètre de déclenchement de procédure de transfert intercellulaire comprend un ou plusieurs parmi au moins un décalage individuel de cellule et au moins un délai de déclenchement.

4. Procédé selon l'une des revendications 2 et 3, comprenant en outre :
l'anonymisation des données étiquetées sur site.

5. Appareil, comprenant :
des moyens pour réaliser un processus selon la revendication 1 ou un processus selon l'une des revendications 2 à 4.

6. Support non transitoire lisible par ordinateur comprenant des instructions de programme stockées sur celui-ci pour réaliser un processus selon la revendication 1 lorsque les instructions sont exécutées par un processeur d'un élément de réseau, ou pour réaliser un processus selon l'une des revendications 2 à 4 lorsque les instructions sont exécutées par un processeur d'un équipement utilisateur.

7. Produit de programme informatique codé avec des instructions pour réaliser un processus selon la revendication 1 lorsque les instructions sont exécutées par un processeur d'un élément de réseau, ou pour réaliser un processus selon l'une des revendications 2 à 4 lorsque les instructions sont exécutées par un processeur d'un équipement utilisateur.
